Europäisches Patentamt

European Patent Office

Office européen des brevets

(11) Veröffentlichungsnummer: **0 184 706 B1**

# EUROPÄISCHE PATENTSCHRIFT

(45) Veröffentlichungstag der Patentschrift: **06.11.91**

(21) Anmeldenummer: **85114890.8**

(22) Anmeldetag: **23.11.85**

(51) Int. Cl.$^5$: **H04L 12/28**, H04L 12/54,
H04L 12/58, H04Q 11/04,
H04Q 3/545, G06F 13/20,
G06F 13/40, G06F 13/28

(54) Schnittstelleneinrichtung.

(30) Priorität: **14.12.84 US 682035**

(43) Veröffentlichungstag der Anmeldung:
**18.06.86 Patentblatt 86/25**

(45) Bekanntmachung des Hinweises auf die
Patenterteilung:
**06.11.91 Patentblatt 91/45**

(84) Benannte Vertragsstaaten:
**BE DE FR GB NL SE**

(56) Entgegenhaltungen:
**EP-A- 0 023 568**
**EP-A- 0 026 083**
**DE-A- 2 748 580**
**US-A- 4 396 995**

**PHILIPS TELECOMMUNICATION REVIEW,
Band 34, Nr. 3, Oktober 1976, Seiten 122-135,
Eindhoven, NL; L.H. SLOTBOOM: "DS 714/81,
a new telegraph and data processor"**

(73) Patentinhaber: **Alcatel N.V.
De Lairessestraat 153
NL-1075 HK Amsterdam(NL)**

(72) Erfinder: **Krishnan, Iyengar Narayanan
39 Benjamin Heights Dr.
Milford, CT 06460(US)**
Erfinder: **Toegel, Herbert Joseph
77 Cross Road
Middlebury, CT 06762(US)**

(74) Vertreter: **Villinger, Bernhard, Dipl.-Ing. et al
Standard Elektrik Lorenz AG Patent- und Lizenzwesen Postfach 30 09 29
W-7000 Stuttgart 30(DE)**

IBM TECHNICAL DISCLOSURE BULLETIN,
Band 26, Nr. 10A, March 1984, Seiten
5199-5206, New York, US; S.E. EDICK: "Direct
memory access controller"

IBM TECHNICAL DISCLOSURE BULLETIN,
Band 14, Nr. 3, August 1971, Seiten 799-800,
New York, US; R.A. PALM et al.: "I/O Channel
for computer"

REVIEW OF ELECTRICAL COMMUNICATION
LABORATORIES, Band 28, Nr. 5-6, Mai-Juni
1980, Seiten 338-349, Tokyo, JP; T. UCHIYA-
MA et al.: "Digital data Switching control
system"

INTERNATIONAL SWITCHING SYMPOSIUM,
Paris, 7-11 Mai 1979, Seiten 267-274, Dokument 20B6, Paris, FR; K. MAWATATI et al.: "A
distributed controligital data switching system"

**Beschreibung**

Die Erfindung betrifft eine Schnittstelleneinrichtung zum Übertragen von Nachrichten zwischen einem Zeitmultiplexbus einer über ein erstes Tor angeschlossenen Einrichtung zum Aufbau von Nachrichtenwegen und einem über ein zweites Tor angeschlossenen Mikrorechner.

Frühere Nachrichtenvermittlungssysteme weisen eine zentrale Steuerung auf, die alle Abläufe wie Verbindungsaufbau, Protokollumsetzung, Überwachungs- und Servicefunktionen steuert. Ein entscheidender Nachteil war jedoch bei auftretenden Fehlern, daß die gesamte Steuerung ausfallen konnte.

Heute sind dezentral gesteuerte Nachrichtenvermittlungssysteme bekannt, die ein digitales Koppelfeld aufweisen, an das eine Vielzahl unabhängig arbeitender Schnittstelleneinheiten angeschlossen sind, die wiederum mit einer Vielzahl von Teilnehmern verbunden sind. Solche Schnittstelleneinheiten weisen zur dezentralen Steuerung normalerweise einen Mikrorechner auf, der die Nachrichtenübertragungen unter Teilnehmern verschiedener Schnittstelleneinheiten über das Koppelnetz oder unter Teilnehmern der gleichen Schnittstelleneinheit steuert. Ein solches digitales Nachrichtenvermittlungssystem mit digitaler Steuerung ist aus Elektrisches Nachrichtenwesen Band 56 Nr. 2/3, 1981, "SYSTEM 12 von ITT" bekannt.

Die technische Aufgabe nach der Erfindung besteht darin, eine variable Schnittstelleneinrichtung zum Übertragen von Nachrichten zwischen einer Einrichtung zum Aufbau von Nachrichtenwegen und einem Mikrorechner zu realisieren.

Eine Lösung dieser Aufgabe wird durch die erfindungsgemäße technische Lehre des Patentanspruchs 1 angegeben.

Weitere vorteilhafte Ausgestaltungen des Gegenstandes der Erfindung sind den abhängigen Ansprüchen zu entnehmen.

Im folgenden wird anhand der Zeichnungen ein Ausführungsbeispiel gemäß der Erfindung erläutert. Es zeigen:

Figur 1    ein Blockschaltbild, das die erfindungsgemäße Schnittstelleneinrichtung enthält,

Figur 2    ein Blockschaltbild der Speichereinheit gemäß Figur 1,

Figur 3    ein Blockschaltbild einer Steuereinheit gemäß Figur 1 und

Figur 4    ein Zustandsdiagramm einer Ablaufsteuerung der Steuereinheit gemäß der Erfindung.

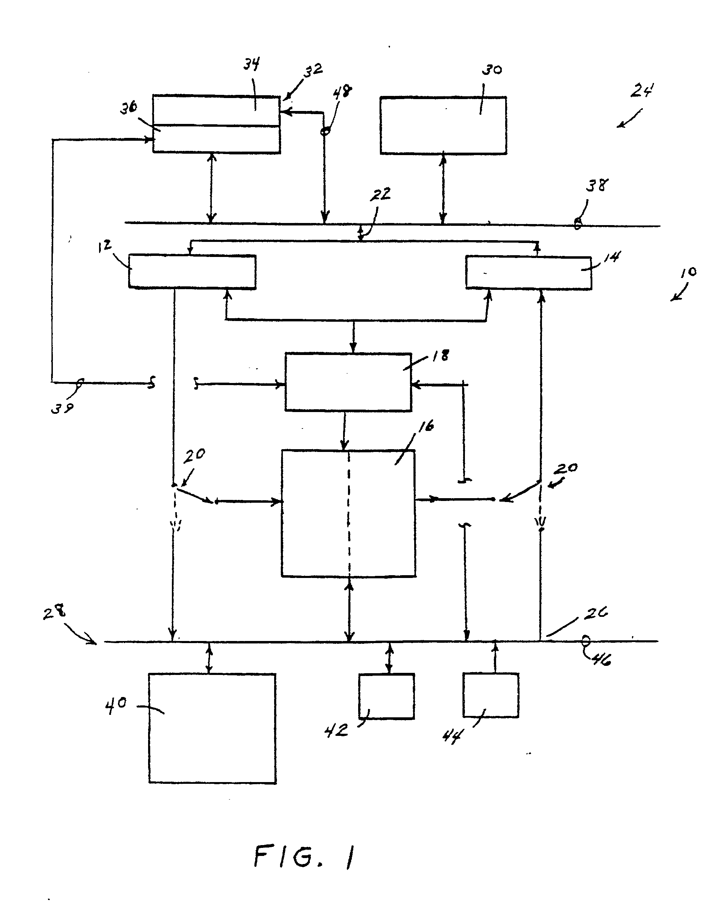

Eine Schnittstelleneinrichtung 10, wie in Figur 1 gezeigt, enthält einen Eingangszwischenspeicher 12, einen Ausgangszwischenspeicher 14, eine Speichereinheit 16 und eine Steuereinheit 18. Zum Auswählen der jeweiligen Betriebsart enthält die Schnittstelleneinrichtung 10 - im folgenden Schnittstelle 10 genannt - Schaltmittel 20. Die Schnittstelle 10 ist einerseits über ein erstes Tor 22 mit einer Einrichtung 24 zum Aufbau von Nachrichtenwegen und andererseits über ein zweites Tor 26 mit einem Mikrorechner 28 verbunden. Die Einrichtung 24 enthält eine Vielzahl serieller Tore 30 und einen Vermittlungskoppler 32, der einen Speicher 34 und eine Kopplersteuerung 36 aufweist.

Die seriellen Tore 30 und der Vermittlungskoppler 32 sind über einen Zeitmultiplexbus 38 untereinander verbunden. Der Bus 38 weist eine Rahmenstruktur auf, wobei jeder Rahmen in 32 Kanäle mit je 16 Wörtern aufgeteilt ist. Somit ergeben sich 512 Wörter je Rahmen, wobei jedes Wort eine 16-Bit-Nachricht enthält. Die Nachrichtenübertragung über einen solchen Bus 38 ist bekannt und wird hier nicht weiter erläutert. Der Vermittlungskoppler 32 erzeugt systemspezifische Nachrichten, die über einen 8-Bit Bus 39 zur Steuereinheit 18 übertragen werden.

Der Vermittlungskoppler 32 kann dynamisch eine Vielzahl von Nachrichtenwegen aufbauen oder durchschalten. Für seinen Speicher 34 wird vorzugsweise ein Notizblockspeicher verwendet.

Der Mikrorechner 28 enthält einen Mikroprozessor 40, einen Speicher 42 mit wahlfreiem Zugriff (RAM) und einen Nur-Lesespeicher 44 (ROM), wobei die Speicher 42, 44 über einen internen Bus 46 mit dem Mikroprozessor 40 verbunden sind.

Im allgemeinen können Mikrorechner durch die Fähigkeit einen Quittungssignalbetrieb ("handshake") zum direkten Datenaustausch ("direct memory access) mit einem Speicher mit wahlfreiem Zugriff (RAM) des Mikrorechners durch eine andere "intelligente" Einheit abzuwickeln klassifiziert werden. Solche Mikrorechner werden zum schnellen Datenaustausch mittels der bekannten Direktzugriffstechnik ("direct memory access techique") eingesetzt (z.B. INTEL 8086).

Mikrorechner die diesen Quittungssignalbetrieb nicht ermöglichen haben meistens nur eine 8-Bit Kapazität, d.h. jedes zu verarbeitende Wort weist eine 8-Bit Nachricht auf (z.B. INTEL 8051).

Da für solche Mikrorechner eine Direktzugriffstechnik ("direct memory access technique") nicht anwendbar ist, werden üblicherweise Daten über eine sogenannte Schiebespeichertechnik mittels FIFO-Speicher übertragen. Diese Technik ist jedoch langsamer als die Direktzugriffstechnik, da alle Nachrichten über einen Zwischenspeicher laufen müssen.

Natürlich können solche Mikrorechner die sogar mit 32-Bit Wörtern arbeiten, durch die Schnittstelle 10 benutzt werden.

Die Eingangs- und Ausgangszwischenspeicher 12, 14 weisen ein 16-Bit Register auf . Somit wird aufgrund eines Übernahmesignals der Steuereinheit 18 ein 16-Bit-Wort von dem Bus 38 gelesen oder auf den Bus 38 geschrieben und zwar aus bzw. in den gekennzeichneten Zeitschlitz. Die Kennzeichnung der Zeitschlitze für die 16-Bit Wörter wird durch die Einrichtung 24 gesteuert, die einen Speicherverbindungsbus 48 enthält, der den Vermittlungskoppler 32 und den Bus 38 verbindet und über den Daten in oder aus dem Speicher 34 geschrieben bzw. ausgelesen werden.

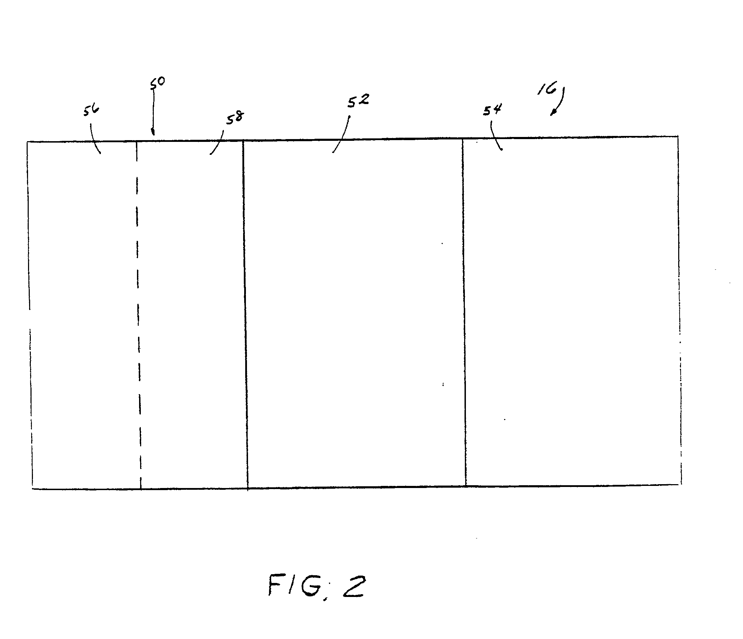

Die Speichereinheit 16, wie in Figur 2 gezeigt, enthält einen Eingangsdatenspeicher 50, einen Ausgangsdatenspeicher 52 und einen Adressenspeicher 54. Der Eingangsdatenspeicher 50 enthält einen ersten Datenzwischenspeicher 56, d.h. Kanal Null und einen zweiten Datenzwischenspeicher 58, d.h. Kanal Eins.

Der Eingangsdatenspeicher 50 ist als 256-Bit Speicher mit wahlfreiem Zugriff (RAM) aufgebaut. Er enthält für den Fall, daß in jedem Wort-Zeitschlitz des Busses 38 ein 8-Bit Wort in den Eingangszwischenspeicher 12 übertragen wird, je ein 16 x 8 Bit organisierter erster und zweiter Datenzwischenspeicher 56, 58 für Kanal Null bzw. Kanal Eins.

Der Ausgangsdatenspeicher 52 und der Adressenspeicher 54 sind als 256-Bit Speicher mit wahlfreiem Zugriff aufgebaut.

Somit ist die Schnittstelle 10 für den Zwischenspeicherbetrieb - oder auch FIFO-Betrieb genannt - oder für den Direktzugriffsbetrieb ausgelegt.

Im FIFO-Betrieb tauschen der Eingangszwischenspeicher 12 und der Ausgangszwischenspeicher 14 Daten mit dem Eingangsdatenspeicher 50 bzw. dem Ausgangsdatenspeicher 52 der Speichereinheit 16 aus. Diese Betriebsart ist in Figur 1 durch den ausgezogenen Strich der Schaltmittel 20 dargestellt.

Im Direktzugriffsbetrieb, durch die unterbrochene Linie der Schaltmittel 20 in Figur 1 dargestellt, sind der Eingangszwischenspeicher 12 und der Ausgangszwischenspeicher 14 direkt mit dem internen Bus 46 des Mikrorechners 28 verbunden.

Im FIFO-Betrieb wird angenommen, daß jeder Wort-Zeitschlitz des Busses 38 ein 8-Bit Wort enthält und daß der Schnittstelle 10 eine Anzahl dieser Zeitschlitze je Rahmen zugewiesen ist. Zusätzlich wird jede Nachricht in Segmenten übertragen und zwar unabhängig von der Übertragungsrichtung, wobei jedes Segment einem Wort entspricht und in einem der zugewiesenen Anzahl von Zeitschlitzen übertragen wird.

Jedes fortlaufende Nachrichtensegment wird in dem gleichen vorbestimmten Wort-Zeitschlitz in fortlaufenden Rahmen abgelegt. Dabei kann der Mikrorechner 28 ein 8-Bit oder ein 16-Bit Rechner sein.

Somit können Segmente zweier unterschiedlicher Nachrichten praktisch gleichzeitig durch den Eingangsdatenspeicher 50, d.h. durch den ersten 56 und den zweiten 16 x 8 Bit Datenzwischenspeicher 58 aufgenommen und durch den Mikrorechner 28 verarbeitet werden.

Der Mikrorechner 28 erzeugt beim Übertragen von Nachrichten über den Ausgangszwischenspeicher 14 auf den Bus 38 8-Bit Wörter, die entsprechend in je einem der zugewiesenen Anzahl von Wort-Zeitschlitzen je Rahmen eingeblendet werden.

Falls der Bus 38 für 16-Bit Wörter bestimmt ist, kann der angeschlossene 16-Bit Mikrorechner 28 nur noch eine Nachricht zur gleichen Zeit annehmen. Somit würde die räumliche Trennung zwischen dem Kanal Null und dem Kanal Eins in der Speichereinheit 16 entfallen, da 16-Bit Wörter aufgenommen werden müssen.

Im Direktzugriffsbetrieb werden die Nachrichten direkt zwischen dem Mikrorechner 28 und den Speichern 12, 14 ohne weitere Schreib-/Leseschritte ausgetauscht.

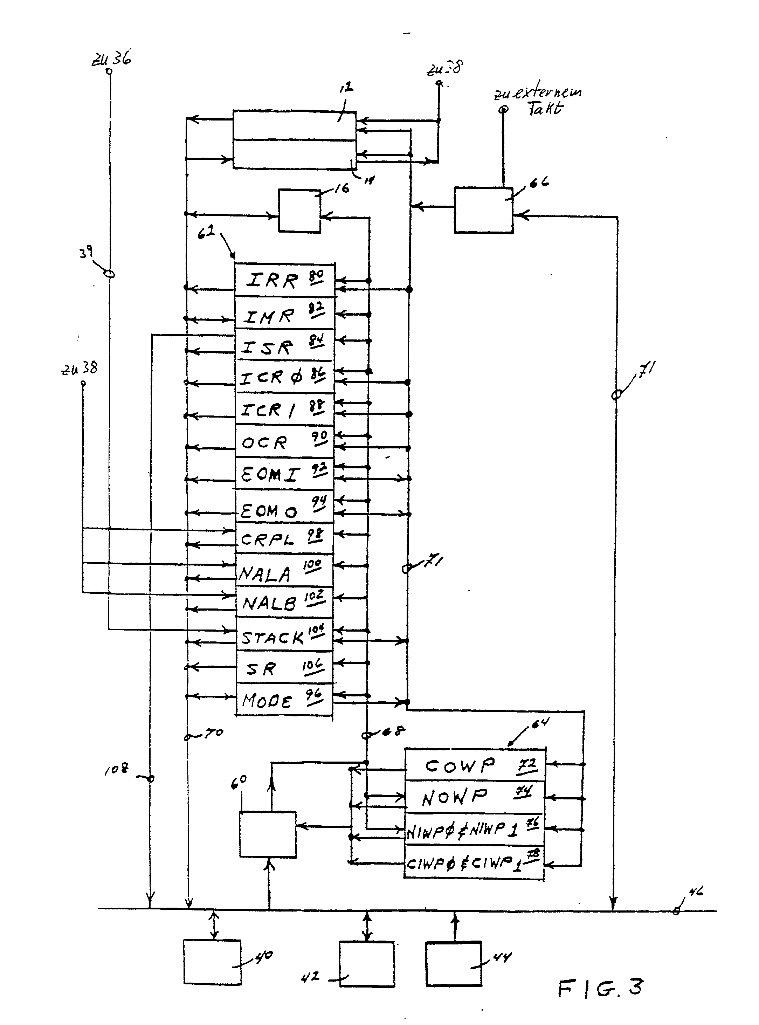

Figur 3 zeigt detailliert die Steuereinheit 18. Sie enthält einen Adressendekodierer 60, eine Vielzahl von Registern 62, eine Vielzahl von Zählern 64 und eine Ablaufsteuerung 66. Der Adressendekodierer 60 ist entsprechend den Speichern aufgebaut, um dem Mikrorechner 28 einen direkten Zugriff zu den Registern 62, den Zählern 64 und der Speichereinheit 16 zu ermöglichen. Der Adressendekodierer 60 ist mit jedem Register 62, den Zählern 64 und der Speichereinheit 16 über einen Adressbus 68 verbunden. Der Mikrorechner 28 greift über den internen Bus 46 auf den Adressendekodierer 60 und über einen an den internen Bus 46 angeschlossenen Datenbus 70 auf die Register 62, die Speichereinheit 16 und den Eingangs- sowie auf den Ausgangszwischenspeicher 12, 14 zu.

Unter "entsprechend den Speichern aufgebaut" versteht man, daß der Mikrorechner 28 z.B. über den Adressendekodierer 60 eine Adresse aus dem Nur-Lesespeicher 44 wiedergewinnen kann. Die Adresse liegt an den Anschlüssen des Adressendekodierers 60 an, der diese dem Mikrorechner 28 zuleitet, wodurch dieser einen Schreib- oder Lesebefehl über den Datenbus 70 zu der adressierten Einheit weiterleitet. Die auf dem internen Bus 46 vom Mikrorechner 28 multiplex vorliegenden Daten und Adressen werden über den Datenbus 70 bzw. den Adressenbus 68 gesendet. Ferner werden die Übernahmesignale von der Ablaufsteuerung 66 erzeugt und über einen Steuerbus 71 gesendet, der mit dem Eingangszwischenspeicher 12, dem Ausgangszwischenspeicher 14, mit bestimmten im folgenden noch näher zu erläuternden Register 62, mit den Zählern und mit dem internen Bus 46 verbunden ist.

In der folgenden Beschreibung der Vielzahl von Registern 62 wird unter dem Begriff "Setzen" jeder Wechsel eines logischen Pegels eines Bits in einem Register als Antwort auf ein Ereignis verstanden. Der Begriff "Rücksetzen" bezeichnet das Annehmen des vorherigen logischen Pegels eines bestimmten Bits, das sich als Antwort auf ein Ereignis geändert hatte, d.h. daß die Bits einen Anfangspegel annehmen. Dabei ist es unerheblich, ob der Anfangspegel eine logische Eins oder eine logische Null ist. Mit logisch Eins und logisch Null soll dabei kein besonderer Spannungspegel (oder Strom) festgelegt werden.

Die Zähler 64 enthalten im Detail, wie Figur 3 zeigt, vier Zähler 72, 74, 76 und 78 zur Anzeige des

- aktuellen Ausgangswortes 72 (COWP)
- des nachfolgenden Ausgangswortes 74 (NOWP)
- des nachfolgenden Eingangswortes 76 (NIWP) und
- des aktuellen Eingangswortes 78 (CIWP).

Der Zähler 72 wird mit jedem Rahmen inkrementiert und zeigt das Wort an, das als nächstes über den Ausgangszwischenspeicher 14 auf den Bus 38 übertragen wird. Der Zähler 74 wird ebenfalls mit jedem Rahmen inkrementiert und zeigt den Speicherplatz des Wortes, das während des nächsten Rahmens ausgelesen wird. Der Zähler 76 zeigt, speziell für den 16-Bit Betrieb, das nächste Wort das von dem Mikrorechner 28 aus dem Eingangsdatenspeicher 50 ausgelesen wird. Der Zähler 78 schließlich zeigt das Wort, auf das momentan von dem Mikrorechner 28 zugegriffen wird. Im 8-Bit Zeitmultiplexbetrieb wird ein Zähler 76 und ein Zähler 78 für jeden Kanal vorgesehen, d.h. je einen für jeden Eingangskanal 56, 58 des Eingangsdatenspeichers 50. Während der Übertragung von Nachrichtensegmenten wechseln die Zähler 64 mit jedem Rahmen ihren Zustand und erzeugen kontinuierlich aktualisierte Adressen für den Adressendekodierer 60.

Die Register 62 enthalten Unterbrechungsregister 80, 82 und 84 , Register 86, 88 und 90 zum Zählen der Wörter oder zum Erhöhen der Adressen, Nachrichtenende-Register 92 und 94, ein Betriebsartregister 96 und weitere systemspezifische Register 98, 100, 102 104 und 106.

Die Unterbrechungsregister teilen sich auf in ein Unterbrechungsanforderungsregister 80 (IRR), ein Unterbrechungsmaskierungsregister 82 (IMR) und ein Unterbrechungs ausführungsregister 84 (ISR). Die Register zum Zählen der Wörter teilen sich auf in ein Eingangszählregister für Kanal Null 86. (ICRO), ein Eingangszählregister für Kanal Eins 88 (ICR1) und in ein Ausgangszählregister 90 (OCR).

Die Nachrichtenende-Register teilen sich auf in ein Register für das Nachrichtenende einer Eingangsnachricht 92 (EOMI) und ein Register für das Nachrichtenende einer Ausgangsnachricht 94 (EOMO). Die systemspezifischen Register teilen sich in ein Befehlsantwortregister 98 (CRPL), ein erstes Netzwerkalarmregister 100 (NALA), ein zweites Netzwerkalarmregister 102 (NALB), ein Fehlerregister (für falsche Quittungen) 104 (STACK) und ein Stapelzeigerregister 106 (SR) auf. Das Unterbrechungsanforderungsregister 80 ist ein 8-Bit Nur-Leseregister mit folgender Bitbelegung: a) Alarmbit, z.B. Setzen bei Takt- oder Synchronisationsfehler; b) Ende einer Nachricht am Ausgang, c) Ende einer Nachricht am Eingang; Bit b) und c) werden zurückgesetzt, wenn die Register 92 und 94 zurückgesetzt werden; d) ein Stapelspeicherbit, das den logischen Pegel 1 nur dann annimmt, wenn das Fehlerregister 104 einen anderen Logischen Pegel als den Nullpegel aufweist; e) zwei Alarmbits entsprechend dem Netzwerkalarmregister 100, 102; f) zwei Bits um einen "beinahe" Überlauf im Eingang und Ausgang anzuzeigen.

Das Unterbrechungsmarkierungsregister 82 ist ein 8-Bit Register und kann von dem Mikrorechner 28 beschrieben oder ausgelesen werden. Wenn in diesem Register 82 ein Bit gesetzt wird, wird das Setzen eines Bits im Unterbrechungsregister 80 zum Senden eines Unterbrechungssignales an den Mikrorechner 28 verhindert. Wenn der Mikrorechner 28 ein Programm mit Priorität abarbeitet, kann eine Prioritätsregelung durch das Setzen eines Bits im Unterbrechungsmarkierungsregister 82 erfolgen, um sicherzustellen, daß eine Aufgabe mit niederer Priorität nicht ein gerade laufendes Programm mit höherer Priorität stört.

Das Unterbrechungsausführungsregister 84 ist ein 8-Bit Nur-Leseregister. Wenn dort ein Bit gesetzt wird, erzeugt das Register ein Unterbrechungssignal, das über eine Unterbrechungsleitung 108 auf den internen Bus 46 und somit zum Mikrorechner 28 gelangt. Ein Bit im Unterbrechungsausführungsregister 84 wird als Antwort auf eine logische "UND"-Verknüfung des entsprechenden Bits im Unterbrechungsanforderungsregister 80 und dem invertierten Bit im Unterbrechungsmarkierungsregister 82 gesetzt.

Die Eingangszählregister 86 und 88 sind 8-Bit Nur-Leseregister und geben die Anzahl von Wörtern an, die sich in den Datenzwischenspeichern 56 bzw. 58 befinden.

Im Zwischenspeicherbetrieb werden diese Werte mit jedem neu eingelesenen Wort erhöht. Wenn nun Wörter einer entsprechend vorgegebenen Anzahl abgespeichert sind, wird ein entsprechendes Bit im Unterbrechungsanforderungsregister 80 gesetzt.

Das Ausgangszählregister 90 ist ein 8-Bit Nur-Leseregister und sein Wert wird je ausgelesenem Wort erniedrigt. Wenn sein Wert einen vorgege-

nen Schwellwert erreicht, wird ebenfalls ein Unterbrechungsanforderungsbit gesetzt.

Im Direktzugriffsbetrieb bilden eines der Eingangszählregister 86, 88 und das Ausgangszählregister 90 Register zum Erhöhen der Eingangs- und Ausgangsadressen.

Die Nachrichtenende-Register 92 und 94 gewährleisten, daß jede vollständige Nachricht von der folgenden vollständigen Nachricht getrennt wird. Falls ein Nachrichtenendezeichen in den Eingangszwischenspeicher 12 gelesen wird, wird das entsprechende Bit im Unterbrechungsanforderungsregister 80 gesetzt, wobei so lange kein weiteres Nachrichtensegment durch den Eingangszwischenspeicher 12 aufgenommen wird, bis dieses Bit zurückgesetzt wird. Entsprechendes gilt für den Ausgangszwischenspeicher 14.

Das Betriebsartregister 96 ist ein 8-Bit Register, das durch den Mikrorechner 28 ausgelesen oder beschrieben wird. Die Bitbelegung ist wie folgt: a) zwei Bit dienen zum Anzeigen einer Schwelle für einen "beinahe" Überlauf; b) zwei Bit dienen zum Anzeigen einer Schwelle für einen "beinahe" leeren Ausgangszwischenspeicher; c) ein Bit dient dazu, der Schnittstelle 10 anzuzeigen, ob ein 8-Bit oder ein 16-Bit Betrieb ablaufen soll; d) ein Bit dient zur Auswahl des Zwischenspeicher- oder des Direktzugriffsbetriebes und d) ein Bit wird im Direktzugriffsbetrieb dazu benutzt, eine bestimmte Adresse im Adressenspeicher 54 so lange zu halten, bis eine gültige Nachricht zu übertragen ist.

Das Befehlsantwortregister 98 sowie das erste 100 und das zweite Netzwerkalarmregister 102 sind 8-Bit Nur-Leseregister und werden entsprechend den Befehlen gesetzt, die in vorbestimmten Antwort- oder Alarmzeitschlitzen eines Rahmens auf dem Bus 38 erscheinen. Somit kann der Mikrorechner 28 zum Ausführen von bestimmten systemorientierten Programmen benutzt werden, die z.B. die Folge von Fehlfunktionen minimiert. Zusätzlich ist das Fehlerregister 104 ein vielfach, z.B. 8 mal 8-Bit Nur-Leseregister, das effektiv jeden Fehler eines Tores oder eines Kanales aufzeichnet, um einen Befehl zu vervollständigen. Wenn eine bestimmte Quelle einen Befehl abgibt, dieser jedoch nicht ausgeführt wird, wird ein Signal im Fehlerregister 104 gespeichert. Das nicht quittierte Signal wird über einen externen 8-Bit Steuerbus von der Kopplersteuerung 36 des Vermittlungskopplers 32 zum Fehlerspeicher 104 übertragen.

Das Stapelzeigeregister 106 ist ein 8-Bit Nur-Leseregister, das die Anzahl der Eintragungen im Fehlerspeicher 104 zählt und entsprechend ein Bit im Unterbrechungsanforderungsregister 80 setzt.

Die Ablaufsteuerung 66 ist als sequentielle Steuerung gebaut, deren Folgezustand nur vom momentanen aktuellen Zustand und den aktuellen Eingangszuständen abhängt. Eine solche sequentielle Steuerung kann durch sogenannte programmierbare logische Anordnungen PLA oder durch progammierbare Nur-Lesespeicher PROM aufgebaut werden.

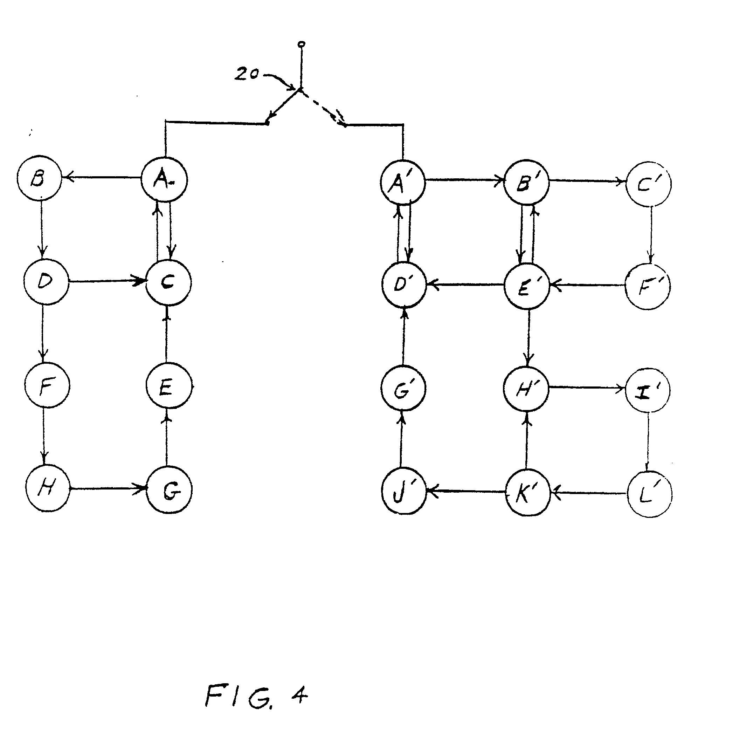

Vorzugsweise wird die Steuereinheit 18 der Schnittstelle 10 in LSI-Technik aufgebaut, und zwar gemäß dem Zustandsdiagramm nach Figur 4. Der Zustandsübergang erfolgt mit einem Takt eines externen Taktgebers, der hier nicht näher dargestellt ist. Normalerweise wird der Takt von einem mit dem System über das erste Tor 22 verbundenen Systemtaktgeber geliefert, so daß die Zustandsübergänge in der Schnittstelle 10 mit dem System koordiniert werden.

Figur 4 zeigt das Zustandsdiagramm für die verschiedenen Zustände bei der Nachrichtenübertragung zwischen dem Bus 38 und dem Mikrorechner 28. Die Schaltmittel 20 werden durch das im Betriebsartregister 96 stehende Bit in den Zwischenspeicher- oder den Direktzugriffsbetrieb gesteuert, wodurch die Ablaufsteuerung 66 entweder den einen oder den anderen Zustandsablauf gemäß Figur 4 ausführt.

Im Zwischenspeicherbetrieb, welches durch die ausgezogene Linie des Schaltmittels 20 dargestellt ist, stellt der Zustand A einen Ruhezustand dar. Aus dem Ruhezustand, wenn taktmäßig freigegeben, wird entweder in den Zustand B oder den Zustand C übergegangen. Dabei bedeutet der Zustand C ein Aktualisieren der Register 62, welches nach jeder Datenübertragung auftritt. Der Zustand B ist ein Zwischenspeicherlesezustand, während dem der Mikrorechner 28 die Nachrichten aus dem Eingangsdatenspeicher 50 liest. Mit dem nächsten Takt wird der Mikrorechner 28 in den Nulloperationszustand D gesetzt und geht vom Zustand D wieder mit dem nächsten Takt entweder in den Zustand C zum Aktualisieren der Register 62 oder in den Zustand F über, der ein Zwischenspeicherschreibzustand ist. Wenn jedoch Nachrichten verfügbar sind, werden diese zuerst von dem Bus 38 übernommen, d.h. eingelesen und falls Nachrichten zu übertragen sind, erfolgt dies mit den nächsten Takten. Nachdem der Zwischenspeicherschreibzustand vorliegt, werden die Nachrichtenenderegister mit dem Zustand G aktualisiert oder es werden Unterbrechungssignale erzeugt. Dann geht die Ablaufsteuerung 66 in den Nulloperationszustand E über. Die Nulloperationszustände D und E sind vorgesehen, um eine schrittweise Synchronisation mit dem Schnittstellenbetrieb und dem Bus 38 sicherzustellen. Danach geht die Ablaufsteuerung 66 in den Zustand C zum Aktualisieren der Register 62 und danach wieder in den Ruhezustand A über.

Grundsätzlich ist das obige Zustandsdiagramm für den folgenden Betriebsablauf im Zwischenspeicherbetrieb vorgesehen.

Zunächst werden Nachrichten auf dem Bus 38 im Kanal Null oder Kanal Eins ausgeblendet und in den Eingangsdatenspeicher 50 übertragen. Der Eingangsdatenspeicher 50 wird infolge eines Nachrichtenende-Unterbrechungssignals oder eines "beinahe voll"-Unterbrechungssignales durch den Mikrorechner 28 ausgelesen.

Nachrichten werden von dem Mikrorechner 28 durch einen Schreibschritt in den Ausgangsdatenspeicher 52 und in einem Folgeschritt vom Ausgangsdatenspeicher 52 in den Ausgangszwischenspeicher 14 geschrieben, von wo aus die Nachrichten in den richtigen Zeitschlitz auf den Bus 38 eingeblendet werden.

Im Direktzugriffsbetrieb ist der Zustand A' ein Ruhezustand, welcher anzeigt, daß die Schnittstelle zum Datenaustausch mit dem Bus 38 bereit ist. Mit dem Takt geht die Ablaufsteuerung 66 in den Zustand B' über, woraufhin die Adresse des nächsten Nachrichtensegmentes eines vorgegebenen Wort-Zeitschlitzes zum Mikrorechner 28 gelangt. Im Zustand C' wird die Adresse durch den Mikrorechner 28 gesichert und im Zustand F' wird das Nachrichtensegment direkt von dem Speicher 42 zum Ausgangszwischenspeicher 14 übertragen. Mit dem Zustand E' wird das Nachrichtensegment im Ausgangszwischenspeicher 14 in den entsprechenden Wort-Zeitschlitz des Busses 38 eingeblendet.

Mit dem nächsten Takt, falls kein ankommendes Nachrichtensegment vorliegt, werden während des Zustandes D', die Register 62 aktualisiert. Wenn jedoch ein ankommendes Nachrichtensegment vorliegt, geht die Ablaufsteuerung 66 in den Zustand A' über. Hier erhält der Mikrorechner 28 die zugeordnete Adresse und im Zustand I' wird diese Adresse in den Speicher 42 eingelesen.

Während den Zuständen L' und K' wird das Nachrichtensegment in den Eingangszwischenspeicher 12 und dann während K' direkt in den Speicher 42 eingeschrieben. Der folgende Zustandsübergang in den Zustand G' ist effektiv ein Nulloperationszustand, wird jedoch genutzt zum Synchronisieren der Ablaufsteuerung 66 mit dem Takt.

Wie in Figur 4 ersichtlich, kann die Ablaufsteuerung 66 im Zustand E' während eines Datenholzyklus oder im Zustand K' während eines Datenabgabezyklus in die Zustände B' bzw. H' übergehen. Dadurch wird der Schnittstelle 10 der Einsatz eines 16-Bit Mikrorechner 28 zum Einsatz in einem 8-Bit System ermöglicht. In einem solchen 8-Bit System ist es wünschenswert, zwei 8-Bit Wörter lesen oder schreiben zu können, um die Effizienz des Mikrorechners 28 zu maximieren.

Somit kann die Schnittstelle 10 mit 8-Bit oder 16-Bit Rechnerkapazität ausgestaltet sein, und zwar mit Direktzugriffsmöglichkeit zu einer 8-Bit oder 16-Bit Einheit.

## Patentansprüche

1. Schnittstelleneinrichtung (10) zum Übertragen von Nachrichten zwischen einem Zeitmultiplexbus (38) einer über ein erstes Tor (22) angeschlossenen Einrichtung (24) zum Aufbau von Nachrichtenwegen und einem über ein zweites Tor (26) angeschlossenen Mikrorechner (28), **dadurch gekennzeichnet,** daß die Schnittstelleneinrichtung (10) eine mit einer Speichereinheit (16), einem Eingangszwischenspeicher (12), einem Ausgangszwischenspeicher (14) und mit Schaltmitteln (20) verbundene Steuereinheit (18) enthält, daß der Eingangszwischenspeicher (12) und der Ausgangszwischenspeicher (14) einerseits mit dem ersten Tor (22) und andererseits über die Schaltmittel (20) entweder in einer ersten Betriebsart über die Speichereinheit (16) oder in einer zweiten Betriebsart direkt mit dem zweiten Tor (26) verbunden sind, und daß die Speichereinheit (16) einen Eingangsdatenspeicher (50) und einen Ausgangsdatenspeicher (52) zum Zwischenspeichern der über die Schnittstelleneinrichtung (10) zu übertragenden Nachrichten in der ersten Betriebsart und einen Adressenspeicher (54) zum Adressieren der direkt zu übertragenden Nachrichten in der zweiten Betriebsart aufweist.

2. Schnittstelleneinrichtung (10) nach Anspruch 1, dadurch gekennzeichnet, daß der Eingangsdatenspeicher (50) einen ersten Datenzwischenspeicher (56) und einen zweiten Datenzwischenspeicher (58) enthält, die in der ersten Betriebsart gleichzeitig verschiedene ankommende Nachrichten abspeichern.

3. Schnittstelleneinrichtung nach Anspruch 2, dadurch gekennzeichnet, daß dem ersten Datenzwischenspeicher (56) und dem zweiten Datenzwischenspeicher (58) je ein Zähler (76) und ein Zähler (78) zugeordnet sind, die die Anzahl der abgespeicherten Nachrichten zählen, welche in einem Eingangszählregister (86) für den ersten Datenzwischenspeicher (56) und einem Eingangszählregister (88) für den zweiten Datenzwischenspeicher (58) abgespeichert und mit vorgegebenen Schwellwerten verglichen werden und daß beim Erreichen dieser Schwellwerte in einem Unterbrechungsanforderungsregister (80) entsprechend zugeordnete Bits gesetzt werden.

4. Schnittstelleneinrichtung (10) nach Anspruch 1, dadurch gekennzeichnet, daß die Steuereinheit (18) ein Register (92) für das Nachrichtenende einer über das erste Tor (22) ankommenden Nachricht und ein Register (94) für das Nachrichtenende einer über das zweite Tor (26) abgehende Nachricht enthält, die mit einem Unterbrechungsanforderungsregister (80) verbunden sind, in dem wenigstens ein erstes Bit und ein zweites Bit abgespeichert sind, die dem Nachrichtenende der über das erste Tor (22) ankommenden bzw. über das zweite Tor (26) abgehenden Nachricht zugeordnet sind.

5. Schnittstelleneinrichtung (10) nach Anspruch 3 oder 4, dadurch gekennzeichnet, daß in der Steuereinheit (18) das Unterbrechungsanforderungsregister (80) und ein Unterbrechungsmaskierungsregister (82) über ein logisches UND-Gatter mit einem Unterbrechungsausführungsregister (84) verbunden sind und daß bei einem im Unterbrechungsanforderungsregister (80) gesetzten Bit und bei einem ein Unterbrechungsmaskierungsregister (82) entsprechenden, invers gesetzten Bit das Unterbrechungsausführungsregister (84) über eine Unterbrechungsleitung (108) ein Unterbrechungssignal an den Mikrorechner (28) sendet.

6. Schnittstelleneinrichtung nach Anspruch 5, dadurch gekennzeichnet, daß die Steuereinheit (18) eine Ablaufsteuerung (66) enthält, die in Abhängigkeit eines zugeführten externen Taktes den Zustandsablauf gemäß der ersten Betriebsart oder der zweiten Betriebsart steuert und daß ein Folgezustand immer von dem momentanen Zustand und den momentan anliegenden Eingangszuständen der Ablaufsteuerung (66) abhängt.

7. Schnittstelleneinrichtung nach Anspruch 1, dadurch gekennzeichnet, daß zum Übertragen von Nachrichten in der zweiten Betriebsart der Adressenspeicher (54) eine jeder Nachricht zugeordnete Adresse abspeichert und daß die Steuereinheit (18) ein Eingangszählregister (86) und ein Ausgangszählregister (90) enthält, die die Adressen der über das erste Tor (22) ankommenden bzw. über das zweite Tor (26) abgehenden Nachrichten inkrementieren.

## Claims

1. Interface (10) for transferring messages between a time-division multiplexed bus (38) of an apparatus (24) for establishing communication paths, which is connected to the interface (10) via a first port (22), and a microcomputer (28), which is connected to the interface (10) via a second port (26), **characterized in** that the interface (10) includes a controller (18) connected to a storage medium (16), to an input buffer (12), to an output buffer (14), and to switching means (20), that the input buffer (12) and the output buffer (14) are connected, on the one hand, to the first port (22) and, on the other hand, via the switching means (20), either, in a first mode, via the storage medium (16) or, in a second mode, directly to the second port (26), and that the storage medium (16) includes an input data buffer (50) and an output data buffer (52) for temporarily storing the messages to be transferred across the interface (10) in the first mode as well as an address storage medium (54) for addressing the messages to be transferred direct in the second mode.

2. An interface (10) as claimed in claim 1, characterized in that the input data buffer (50) includes a first input data buffer (56) and a second input data buffer (58) which store messages incoming on different channels in the first mode.

3. An interface as claimed in claim 2, characterized in that the first input data buffer (56) and the second input data buffer (58) have a first counter (76) and a second counter (78), respectively, associated therewith which count the number of stored messages, which is stored in an input count register (86) for the first input data buffer (56) and in an input count register (88) for the second input data buffer (58) and compared with predetermined threshold values, and that upon attainment of said threshold values, associated bits are set in an interrupt request register (80).

4. An interface (10) as claimed in claim 1, characterized in that the controller (18) includes a register (92) for the end of a message incoming via the first port (22) and a register (94) for the end of a message outgoing via the second port (26) which are connected to an interrupt request register (80) holding at least a first bit and a second bit which are associated with the ends of the messages incoming via the first port (22) and outgoing via the second port (26), respectively.

5. An interface (10) as claimed in claim 3 or 4, characterized in that in the controller (18), the interrupt request register (80) and an interrupt mask register (82) are connected via a logical AND gate to an interrupt service register (84), and that when a bit is set in the interrupt request register (80) and an inverse bit is set in the interrupt mask register (82), the interrupt service register (84) sends an interrupt signal over an interrupt line (108) to the microcomputer (28).

6. An interface as claimed in claim 5, characterized in that the controller (18) includes a sequencer (66) which controls the sequence of states according to the first mode or the second mode in response to a clock signal from an external clock, and that a next state always depends on the present state and the present inputs of the sequencer (66).

7. An interface as claimed in claim 1, characterized in that in order to transfer messages in the second mode, the address storage medium (54) stores an address associated with each message, and that the controller (18) includes an input count register (86) and an output count register (90) which increment the addresses of the messages incoming via the first port (22) and outgoing via the second port (26), respectively.

**Revendications**

1. Montage d'interface (10) servant au transfert de messages entre un bus à multiplexage temporel (38) d'un dispositif (24) d'établissement des voies de messages raccordé par une première porte (22) et un micro-ordinateur (28) raccordé par une deuxième porte (26) *caractérisé en ce que* le montage d'interface (10) renferme une unité de commande (18) reliée à une unité de mémorisation (16), à une mémoire tampon d'entrée (12), à une mémoire tampon de sortie (14) et à des dispositifs de commutation (20), *en ce que* la mémoire tampon d'entrée (12) et la mémoire tampon de sortie (14) sont reliées d'une part à une première porte (22) et d'autre part à une deuxième porte (26) par les dispositifs de commutation (20) soit par l'unité de mémorisation (16) dans un premier mode de fonctionnement soit directement dans un deuxième mode de fonctionnement et *en ce que* l'unité de mémorisation (16) présente une mémoire de données d'entrée (50) et une mémoire de données de sortie (52) pour la mémorisation tampon des messages à transférer par le montage d'interface (10) dans le premier mode de fonctionnement et une mémoire d'adresses (54) pour l'adressage des messages à transférer directement dans le deuxième mode de fonctionnement.

2. Montage d'interface (10) selon la revendication 1 *caractérisé en ce que* la mémoire de données d'entrée (50) comprend une première mémoire tampon de données (56) et une deuxième mémoire tampon de données (58) qui mémorisent simultanément les différents messages entrants dans le premier mode de fonctionnement.

3. Montage d'interface selon la revendication 2 *caractérisé en ce qu'*il est respectivement affecté à la première mémoire tampon de données (56) et à la deuxième mémoire tampon de données (58) un compteur (76) et un compteur (78) dénombrant les messages enregistrés, lequel nombre est mémorisé dans un registre de comptage d'entrée (86) pour la première mémoire tampon de données (56) et dans un registre de comptage d'entrée (88) pour la deuxième mémoire tampon de données (58) et comparé avec des valeurs de seuil prédéterminées et *en ce que* lorsque ces valeurs de seuil sont atteintes des bits affectés de manière correspondante sont mis à un dans un registre de demandes d'interruption (80).

4. Montage d'interface (10) selon la revendication 1 *caractérisé en ce que* l'unité de commande (18) comprend un registre (92) pour la fin d'un message entrant par la première porte (22) et un registre (94) pour la fin d'un message sortant par la deuxième porte (26) qui sont reliés à un registre de demandes d'interruption (80) dans lequel sont au moins mémorisés un premier bit et un deuxième bit, qui sont affectés à la fin du message entrant par la première porte (22) ou du message sortant par la deuxième porte (26).

5. Montage d'interface (10) selon la revendication 3 ou 4 *caractérisé en ce que* le registre de demandes d'interruption (80) et un registre de masquage des interruptions (82) sont reliés dans l'unité de commande (18) à un registre d'exécution des interruptions (84) par une porte ET logique et *en ce que*, pour un bit mis à un dans le registre de demandes d'interruption (80) et pour un bit correspondant positionné de manière inverse dans le registre de masquage des interruptions (82), le registre d'exécution des interruptions (84) envoie un signal d'interruption au microordinateur (28) par une ligne d'interruption (108).

6. Montage d'interface selon la revendication 5 *caractérisé en ce que* l'unité de commande (18) renferme une commande séquentielle (66) qui commande la procédure d'état selon le premier mode de fonctionnement ou selon le deuxième mode de fonctionnement en fonction d'une impulsion de rythme externe injectée et *en ce qu'*un état de séquence dépend toujours de l'état instantané et des états d'entrée instantanés de la commande séquentielle (66).

7. Montage d'interface selon la revendication 1 *caractérisé en ce que*, pour le transfert des messages dans le deuxième mode de fonctionnement, une adresse affectée à chaque message est enregistrée dans la mémoire d'adresses (54) et *en ce que* l'unité de commande (18) renferme un registre de comptage d'entrée (86) et un registre de comptage de sortie (90) qui incrémentent les adresses des messages entrant par la première porte (22) ou des messages sortant par la deuxième porte (26).

EP 0 184 706 B1

FIG. 1

11

56    50       58              52              54        16

FIG. 2

FIG.3

FIG. 4